# EUROPEAN PATENT APPLICATION

(11) **EP 3 051 183 A1**
(43) Date of publication of application: **03.08.2016**
(21) Application number: 16152073.9
(22) Date of filing: 20.01.2016
(51) Int. Cl.: F16H 61/04

(54) **MANAGEMENT AND CONTROL METHOD OF THE GEAR CHANGE AND STARTING PHASES OF A VEHICLE FITTED WITH AN AUTOMATED MANUAL TRANSMISSION AND TRANSMISSION AND STARTING APPARATUS FOR VEHICLES FITTED WITH AUTOMATED MANUAL TRANSMISSIONS**

(30) Priority: 28.01.2015 IT PD20150017
(71) Applicant: Magneti Marelli S.p.A., 20011 Corbetta (MI) (IT)
(72) Inventor: CIAMPOLINI, Franco, 20011 Corbetta (MI) (IT); DENTICI, Ignazio, 20011 Corbetta (MI) (IT)
(74) Representative: Mitola, Marco

(57) **Abstract**

A management and control method of the gear change and starting phases of a vehicle fitted with a manual or automated manual transmission (16), comprising the steps of:
- providing a vehicle having an endothermic engine (8) with relative crankshaft (26), and an automated manual transmission (16) having a clutch, a primary shaft (28) operatively connected to the clutch (24), and a secondary shaft (32) operatively connected to the drive wheels (36) of the vehicle, wherein the primary and secondary shafts (28,32) are provided with gears (40) meshing with each other in a plurality of gears, each having its transmission ratio, the transmission ratio being equal to the ratio between the rotation speed of the primary shaft (28) and the rotation speed of the secondary shaft (32). Advantageously, the method also comprises the steps of:
- providing an electric machine (44) operatively connected to the primary shaft (28) by transmission means (48), said electric machine (44) being mechanically separate from the engine (8),

-performing the gear change operation according to the steps of:
-placing the automated manual transmission in neutral, in which the primary shaft is mechanically disengaged from the secondary shaft,
-providing for the actuation of the electric machine (44) with the clutch (24) engaged and the automated manual transmission (16) in the neutral position, in order to adapt the rotation speed of the primary shaft (28) and of the crankshaft (26) connected thereto by the clutch (24), to the rotation speed of the secondary shaft (32) depending on the gear ratio of the next gear to engage,
-engaging the next gear, keeping the clutch closed.

## Description

### FIELD OF APPLICATION

The present invention relates to a method of managing and controlling the gear change and starting phases of a vehicle with an automated manual transmission and a relative transmission apparatus for vehicles fitted with automated manual transmissions.

### STATE OF THE ART

As is known, hybrid vehicle architectures are multiple and differ substantially in terms of the position of the electric motor in relation to the powertrain.

The hybridisation of a vehicle can be achieved with different types of transmission, such as AT (manual transmission) DCT (dual clutch transmission), CVT (continuous variable transmission) or, in particular, AMT (automated manual transmission).

AMT is the transmission that ensures the best results in terms of CO2 cycle reduction, and also allows the transformation of the vehicle into HEV without the need to re-engineer the transmission.

The automated transmission AMT (Automated Manual Transmission) is currently the transmission which achieves the best results on the market in terms of reduction of CO2 and fuel consumption.

The AMT also improves the driving sensation optimising the opening and closing phases of the clutch, appropriately managed by a dedicated CU, thus controlling the transfer of torque from the engine to the transmission.

One disadvantage of the AMT or manual transmission MT is the torque gap during the gear change phase.

In a nutshell, the transmission apparatus comprises the engine, fitted with its crankshaft, a clutch which connects the crankshaft to the primary shaft of the transmission, a plurality of gears which connect the primary shaft to the secondary shaft depending on the desired gear or ratio; the secondary shaft is in turn mechanically connected to the drive wheels of the vehicle.

The gear change operation, in the prior solutions, involves the following phases:
1) Opening of the clutch, and therefore disconnection of the crankshaft of the engine from the primary transmission shaft,
2) Disengagement of the previous gear, selection of the next gear and resulting insertion thereof,
3) Closing of the clutch, and therefore renewed connection of the crankshaft of the engine to the primary transmission shaft.

During phase 2), the control of the endothermic engine must ensure the achievement of a new setpoint of engine revolutions starting from the rotation speed prior to the opening of the clutch. In fact, for the same speed of the vehicle, the rotation speed of the endothermic engine depends on the ratio engaged on the transmission. In other words, the rotation speed of the secondary transmission shaft depends on the speed of the drive wheels and thus on the speed of progress of the vehicle; the speed of the primary shaft, instead, depends on the ratio engaged, i.e. on the gear. The rotation speed of the endothermic engine must equal that of the primary shaft to which it is connected following the closure or engagement of the clutch.

The control of the rotation speed of the crankshaft is normally performed by the control strategies of the endothermic engine by acting on the engine itself, for example on the suction system and/or the injection system, in order to reach the new setpoint.

Once the new target speed is reached, the control unit of the transmission closes the clutch allowing the endothermic engine to transfer torque to the drive wheels again.

To date with automated manual transmissions, gear change phases may last up to 1 second: this duration is clearly perceived by the driver and the passengers as a variation of the longitudinal acceleration of the vehicle and makes the gear change incomparable, in terms of performance, with those possible for example with AT or DCT type transmissions.

It is therefore known of, should one wish to achieve a continuous or 'seamless' gear change, to opt for different types of transmission, such as for example the aforementioned CVT or DCT.

The former however increase fuel consumption and pollutant emissions and the latter are far more expensive and complex to implement.

### PRESENTATION OF THE INVENTION

The need is therefore felt to resolve the drawbacks and limitations mentioned with reference to the prior art.

In particular, the need is felt in the art to solve the problems of perception of deceleration when changing gear and of reliability/ duration of the synchronisers in relation to an AMT type transmission, so as not to forego the benefits of this type of transmission in terms of low fuel consumption, low emissions and low costs.

This requirement is satisfied by a management method of the gear change phases according to claim 1 and by an apparatus according to claim 11.

### DESCRIPTION OF THE DRAWINGS

Further characteristics and advantages of the present invention will be more clearly comprehensible from the description given below of its preferred and non-limiting embodiments, wherein:
figure 1 shows a schematic view of a transmission apparatus according to one embodiment of the present invention;
figures 2a-2b show diagrams of the main operating parameters of a transmission apparatus according to the present invention, during a gear change.

The elements or parts of elements common to the embodiments described below will be indicated using the same reference numerals.

### DETAILED DESCRIPTION

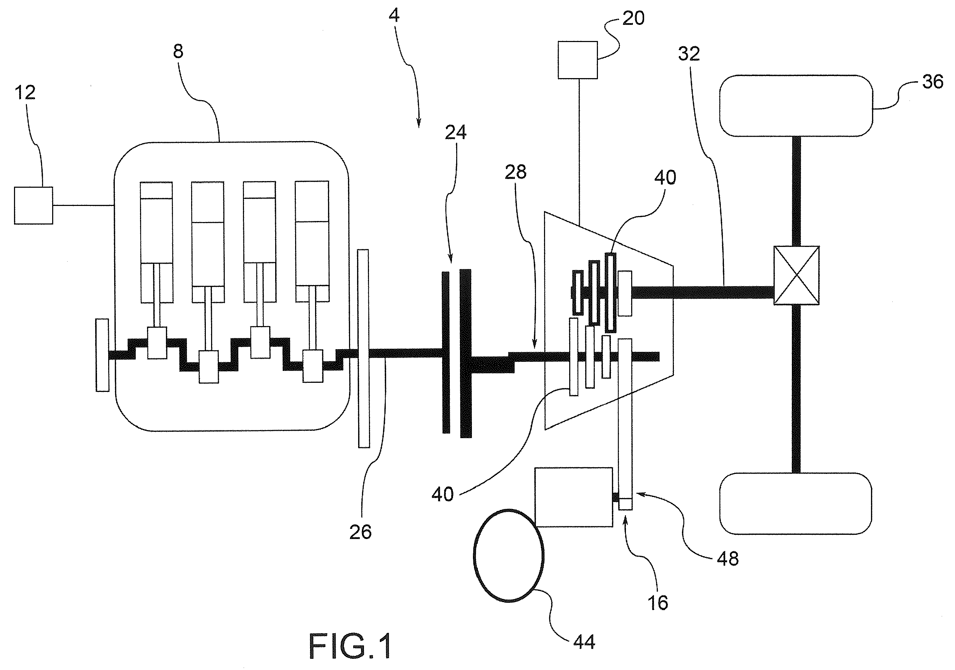

With reference to the aforementioned figures, reference numeral 4 globally denotes a schematic overall view of a transmission apparatus of a vehicle according to the present invention, illustrated for example in figure 1.

In particular, the transmission apparatus 4 for vehicles comprises an endothermic engine 8 fitted with an engine control unit 12, and a manual or an automated manual transmission 16, preferably said manual or automated manual transmission being in turn fitted with a transmission control unit 20.

For the purpose of this invention the specific type of endothermic engine or the specific type of automated manual transmission is not relevant, 'automated gearbox' being understood to be a type of gearbox for automotive use in which the manual drives are replaced by automatic drives, such as for example hydraulic, electrical or electromechanical actuators, with particular reference to the clutch engagement/disengagement operations and the engagement/disengagement of speed ratios.

The automated manual transmission 16 is fitted with a clutch 24 operatively connected to a crankshaft 26 of the engine 8, a primary shaft 28 operatively connected to the clutch 24, and a secondary shaft 32 operatively connected to the drive wheels 36 of the vehicle, wherein the primary and secondary shafts 28,32 are provided with gears 40 meshing with each other in a plurality of gears each having its transmission ratio, the transmission ratio being equal to the ratio between the rotation speed of the primary shaft 28 and the rotation speed of the secondary shaft 32.

For example, the automated manual transmission 16 comprises electrical or electromechanical hydraulic actuators which disengage the previous gear inserted, by disconnecting the primary shaft 28 and the secondary shaft 32 by means of the gears 40, select the next gear and insert it, connecting the primary shaft 28 and the secondary shaft 32 to each other by means of said gears 40.

Advantageously, the transmission apparatus 4 comprises an electric machine 44 operatively connected to the primary shaft 28 by transmission means 48, said electric machine 44 being mechanically separate from the engine 8.

For the purpose of the present invention an electric machine is understood to be a machine which can function both as an engine, so as to receive electricity in input and provide mechanical energy in output, and as a generator, so as to receive mechanical energy in input and supply electricity in output, in the known manner. In addition, the electric machine, when functioning as a motor, can supply torque in both directions of rotation of the motor shaft, according to the drive received, in the known manner.

The transmission means 48 may be of any type and comprise mechanisms, gears, pulleys, belts, chains, linkages and the like. The electric motor 44 may also be integrated on the primary shaft 28 of the automated manual transmission 16 with an outer rotor or hollow shaft type solution.

Advantageously, the transmission control unit 20 is programmed to perform a gear change according to the phases of:
- placing the automated manual transmission 16 in neutral, in which the primary shaft 28 is mechanically disengaged from the secondary shaft 32,
- providing for the actuation of the electrical machine 44, with the clutch 24 engaged and the automated manual transmission 16 in the neutral position, in order to adapt the rotation speed of the primary shaft 28 and of the crankshaft 26 connected thereto by the clutch 24, to the rotation speed of the secondary shaft 32 depending on the gear ratio of the next gear to engage,
- engaging the next gear, keeping the clutch closed.

According to one embodiment, during the gear change phases the engine 8 is controlled so as not to deliver drive torque; in other words the engine control unit 12 is programmed so as not to deliver drive torque to the crankshaft 26 during the gear change phases.

This way the disengagement operation of the previous gear and engagement of the subsequent gear is facilitated without the need to open the clutch 24, i.e. to disconnect the primary shaft 28 from the crankshaft 26 as is the case in the solutions of the prior art.

According to a possible embodiment, the variation of rotation speed of the primary shaft 28, set by said electric machine 44, is of the linear type.

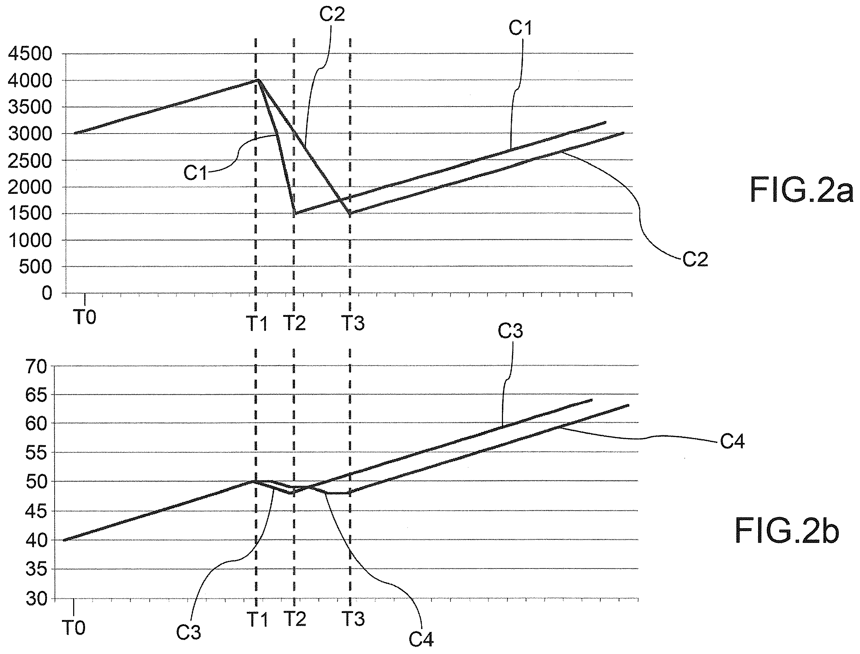

For example, such a substantially linear law of variation of the rotation speed of the primary shaft 28 is illustrated in figure 2a, with particular reference to a transition from a lower gear (with a higher transmission ratio) to a higher gear (with a lower transmission ratio).

In this figure 2a the curve C1 illustrates the law of variation of the rotation speed of the crankshaft 26 (and thus also of the primary shaft 28 connected to it during the gear change with the clutch 24 engaged or closed) obtainable with the electric machine 44, compared to the curve C2 which illustrates the law of variation of the rotation speed of the crankshaft 26 which can be obtained with the control methods of the prior art acting by means of the engine control unit 12.

The y-axis of said figure 2a shows the rotation speeds of the crankshaft 26. The x-axis shows the time. In particular, from time T0 until time T1 the vehicle is in the acceleration phase, before the next gear change.

The gear change begins at time T1, when, with the clutch 24 engaged, the rotation speed of the crankshaft 26 begins to drop. From the analysis of Figure 2a it is evident how the slope and thus the reduction of rotation speed of the motor 26 which can be obtained with the electric machine 44 (curve C1) is much greater than the slope and relative reduction of rotation speed which can be obtained with the conventional methods (curve C2).

In the case of use of an electric machine 44 according to the present invention (curve C1), the gear change terminates at time T2 which is well below the time T3 required for the solution of the prior art to complete the same second phase of the gear change (curve C2).

Moreover, as seen, the solutions of the prior art also provide for the steps of disengagement and subsequent engagement of the clutch 24 to be able to change gear, phases that instead, according to the present invention, are completely omitted.

Figure 2b shows the corresponding trend of the rotation speed of the secondary shaft 32, and thus of the speed of progress of the vehicle, in case of use of an electric machine 44 (curve C3) and in the case of use of a transmission of the prior art (curve C4). As seen, the rotation speed of the secondary shaft 32, the latter being connected to the drive wheels 36, is directly related to the speed of progress of the vehicle.

It can be seen how from the time T0 to the time T1 the rotation speed of the secondary shaft 32, and thus the speed of progress of the vehicle, increase. As a result the rotation speed of the secondary shaft 32, during the gear change phase, tends to fall. This fall is due to the fact that the crankshaft 26 does not transmit torque to the primary shaft 28, and the vehicle slows down inasmuch as subject to aerodynamic drag, rolling resistance and internal friction.

In the case of use of an electric machine 44 according to the invention, the time interval during which the speed of progress of the vehicle is reduced is limited and comprised between T1 and T2 (curve C3); in the case of the prior art, the time interval during the speed of progress of the vehicle is reduced is more extensive and comprised between T1 and T3 (curve C4).

The curve C3 also highlights how, in the case of use of an electric machine 44 for synchronising the rotation speed of the crankshaft 26 with the secondary shaft 32, the vehicle is able to resume its acceleration phase, i.e. increase in speed of progress, already starting from the instant T2; instead, in the case of the solution of the prior art, the vehicle may only resume its acceleration starting from the interval T3. In other words, thanks to the present invention the gear change time is reduced, the deceleration phase of the vehicle is limited and acceleration is enabled earlier. In the case instead of a conventional transmission, the gear change time is increased, the deceleration phase of the vehicle is lengthened and acceleration is enabled after a longer period of time.

It is clear how the driver or passengers have a greater perception of the gear change in the latter case (prior art - curve C4) compared to the case in which the electric machine 44 works to perform fast synchronisation between the crankshaft 26 and the secondary shaft 32 (electric machine 44 - C3 curve.

For example in the case of transition from a lower gear to a higher gear, in which said higher gear provides for a lower transmission ratio than that of the lower gear, the electric machine 44 will tend to reduce the rotation speed of the primary shaft 28.

Moreover, in the case of transition from a higher gear to a lower gear, in which said lower gear provides for a higher transmission ratio than that of the higher gear, the electric machine 44 will tend to increase the rotation speed of the primary shaft 28.

During the gear change phases, the engine control unit 12 and the transmission control unit 20 are operatively connected to each other to synchronise the drives of the engine 8, the automated manual transmission 16 and the electric machine 44.

According to a possible embodiment, the electric machine 44, when no gear changes are being made, is used as a generator, recovering kinetic energy from the vehicle and recharging a battery of the endothermic engine 8 and/or any electrical utilities of the vehicle.

According to a possible embodiment, the starting of the endothermic engine 8 is provided for, in the following phases:

-positioning the automated manual transmission 16 in neutral, in which the primary shaft 28 is mechanically disengaged from the secondary shaft 32,

-placing the clutch 24 in the engaged condition, i.e. connecting the crankshaft 26 to the primary shaft 28,

-providing for the starting of the electric machine 44, with the clutch 24 engaged and the gear in the neutral position, so as to make the crankshaft 26 rotate and start the engine 8.

As may be appreciated from the above description, the present invention makes it possible to overcome the drawbacks and limitations mentioned with reference to the

### prior art.

As seen, the architecture presented in this patent provides for the use of an electric motor connected, if necessary by suitable transmission means, such as a reduction mechanism or directly by means of an outer rotor solution or a hollow shaft solution, to the primary transmission shaft, downstream of the clutch connecting the endothermic engine to said shaft.

This architecture ensures all the typical functions of a "mild hybrid" vehicle, namely:
- Geared EV mode
- ICE restart
- Extended start and Stop
- E-boost function
- E-braking
- Cruising

and also solves the main drawback of the automated manual transmission AMT, i.e. the torque gap during gear change.

In fact, on the one hand the present invention makes it possible to considerably reduce the gear change time since it permits extremely fast and precise control of the rotation speed of the crankshaft in synchronising it with that of the primary shaft function depending on the gear to be inserted. Thanks to this control it is possible to avoid disengaging and re-engaging the clutch to perform the gear change and, thus to skip the first and the third phases of a gear change normally performed in a gear change of a traditional type.

This way the invention makes it possible to substantially eliminate the perception by the driver of the torque gap while changing gear, reducing its duration to an interval that cannot be perceived by the driver as a reversal of the longitudinal acceleration of the vehicle.

As a result, the operation of the automated manual transmission AMT becomes equivalent to that of an automatic transmission AT or dual clutch transmission DCT.

Thus, the present invention makes it possible to obtain a reduction of the duration of a gear change, thanks to the fast synchronisation of the revolutions of the motor with respect to the primary shaft of the transmission, thanks to the direct intervention of the electric machine operatively connected to the primary shaft of the transmission.

This way it is possible to change gear without having to disengage and subsequently engage the clutch: in other words it completely bypasses the first and the third phases of a gear change of a traditional type.

The presence of an electric motor connected to the primary shaft of an AMT transmission makes it possible to greatly improve the gear change phase: in fact, during a gear change phase, it is possible to control the rotation speed of the crankshaft via the very fast and very accurate control of the revolutions of the electric motor, the rotation of which is integral with that of the primary shaft (except in the case of a possible fixed reduction ratio between the revolutions of the electric motor and the revolutions of the primary shaft). This system architecture thus makes it possible to significantly reduce the duration of a gear change and thus improve the driving sensation.

The patent presents a system architecture that, using an electric motor connected to the primary shaft of the MT or AMT, reduces the torque gap making it undetectable by the driver, and enhancing the driving sensation, making it substantially equivalent to an automatic transmission. In fact the gap is not entirely eliminated, being present at the stage of inserting the new gear, but is reduced to a sufficiently short interval of time as not to be perceived by the driver or passengers, so as to give the feeling of continuity typical of a CVT type or even DCT (dual-clutch) transmission and AT (automatic transmission), while avoiding the drawbacks of this type of transmission in terms of consumption and pollution.

In addition, the electric motor on the primary shaft of the transmission provides some typical functions of hybrid vehicles, turning the ICE vehicle into HEV with further benefits as regards CO2 and fuel consumption.

Moreover, with this architecture, the actuation of the AMT may be both hydraulic and, especially, all-electric, a choice justified by the integration of an electric traction motor increasing the electrification of the powertrain.

In particular, in the case of an electrically actuated AMT the performance is even better due to the higher implementation speed of this solution.

In brief, the present invention improves the performance of an AMT transmission making it a competitor of the automatic transmission, but with considerable savings in terms of CO2 emissions.

This way the invention allows the optimisation of an automated transmission so as to have gear change performance similar to that of continuously variable transmissions CVT or even dual clutch transmissions (DCTs), without sacrificing the low fuel consumption and low costs typical of an AMT transmission.

In addition, the invention also makes it possible to optimise an automated manual transmission in order to have gear change performance similar to that of continuously variable transmissions CVT or even dual clutch transmissions (DCTs), with even lower costs and consumption than those of an automated manual transmission (AMT).

Moreover, as seen, the insertion of an electric motor on the primary shaft of the transmission allows the transformation of the vehicle into a HEV (hybrid electric vehicle) with a lower delta cost compared to HEV architectures comparable in terms of performance.

Lastly, with this architecture the vehicle can have a full EV mode, which is a totally electric operating mode, compatibly with the mechanical power of the motor and the electric power available from the battery, taking advantage of the possibility of changing the ratios between the electric motor and the wheels.

A person skilled in the art may make numerous modifications and variations to the gear change methods and transmission apparatuses described above so as to satisfy contingent and specific requirements while remaining within the sphere of protection of the invention as defined by the following claims.

## Claims

1. Management and control method of the gear change and starting phases of a vehicle fitted with a manual or automated manual transmission (16), comprising the steps of:
- providing a vehicle having an endothermic engine (8) with relative crankshaft (26), and an automated manual transmission (16) having a clutch, a primary shaft (28) operatively connected to the clutch (24), and a secondary shaft (32) operatively connected to the drive wheels (36) of the vehicle, wherein the primary and secondary shafts (28,32) are provided with gears (40) meshing with each other in a plurality of gears, each having its transmission ratio, the transmission ratio being equal to the ratio between the rotation speed of the primary shaft (28) and the rotation speed of the secondary shaft (32), **characterised in that** it comprises the steps of:
- providing an electric machine (44) operatively connected to the primary shaft (28) by transmission means (48), said electric machine (44) being mechanically separate from the engine (8),
- performing the gear change operation according to the steps of:
- placing the automated manual transmission in neutral, in which the primary shaft is mechanically disengaged from the secondary shaft,
- providing for the actuation of the electrical machine (44), with the clutch (24) engaged and the automated manual transmission (16) in the neutral position, in order to adapt the speed of rotation of the primary shaft (28) and of the crankshaft (26) connected thereto by the clutch (24), to the rotation speed of the secondary shaft (32) depending on the gear ratio of the next gear to engage,
- engaging the next gear, keeping the clutch closed.

2. Method according to the claim 1, in which during the gear change steps the engine is controlled so as not to supply torque.

3. Method according to claim 1 or 2, wherein the variation of rotation speed of the primary shaft (28), set by said electric machine (44), is of the linear type.

4. Method according to claim 1, 2 or 3, wherein in the case of transition from a lower gear to a higher gear, in which said higher gear provides for a lower transmission ratio than that of the lower gear, the electric machine (44) will tend to reduce the rotation speed of the primary shaft (28).

5. Method according to any of the previous claims, wherein in the case of transition from a higher gear to a lower gear, in which said lower gear provides for a higher transmission ratio than that of the higher gear, the electric machine (44) will tend to increase the rotation speed of the primary shaft (28).

6. Method according to any of the previous claims, wherein the endothermic engine (8) is provided with an engine control unit (12) depending on the torque demand made by the user, the automated manual transmission (16) is provided with a transmission control unit (20), wherein said control units (12,20) are operatively connected to each other to synchronize the actuation of the engine (8), of the automated manual transmission (16) and of the electric machine (44) during the gear change.

7. Method according to any of the previous claims, wherein the automated manual transmission (16) comprises electrical or electromechanical actuators which disengage the previous gear inserted, by disconnecting the primary shaft (28) and the secondary shaft (32) from each other, select the next gear and insert it, connecting the primary shaft (28) and the secondary shaft (32).

8. Method according to any of the previous claims, wherein the electric machine (44), when no gear changes are being made, is used as a generator, recovering kinetic energy from the vehicle and recharging a battery of the endothermic engine (8) and/or any electrical utilities of the vehicle.

9. Method according to any of the previous claims, wherein the starting of the endothermic engine is provided for, according to the steps of:
- positioning the automated manual transmission (16) in neutral, in which the primary shaft is mechanically disengaged from the secondary shaft,
- placing the clutch in the engaged condition, i.e. connecting the crankshaft (26) with the primary shaft (28),
- providing for the starting of the electric machine (44), with the clutch (24) engaged and the gear in the neutral position, so make the crankshaft (26) rotate and start the engine.

10. Method according to any of the previous claims, wherein said transmission means (48) comprise a kinematism, or an outer rotor solution or a hollow shaft solution.

11. Transmission apparatus (4) for vehicles comprising:
- an endothermic engine (8) fitted with a crankshaft (26) and an engine control unit (12), - an automated manual transmission (16) of a transmission control unit (20), a clutch (24), a primary shaft (28) operatively connected to the clutch (24), and a secondary shaft (32) operatively connected to drive wheels (36) of the vehicle, wherein the primary and secondary shafts (28,32) are provided with gears (40) meshing with each other in a plurality of gears, each having its transmission ratio, the transmission ratio being equal to the ratio between the rotation speed of the primary shaft (28) and the rotation speed of the secondary shaft (32), **characterised in that**
- the apparatus comprises an electric machine (44) operatively connected to the primary shaft (28) by transmission means (48), said electric machine (44) being mechanically separate from the engine (8),
- the transmission control unit is programmed to perform a gear change according to the following steps:
- placing the automated manual transmission in neutral, in which the primary shaft is mechanically disengaged from the secondary shaft,
- providing for the actuation of the electrical machine (44), with the clutch (24) engaged and the gear in the neutral position, in order to adapt the speed of rotation of the primary shaft (28) and of the crankshaft (26) connected thereto by the clutch (24), to the rotation speed of the secondary shaft (32) depending on the gear ratio of the next gear to engage,
- engaging the next gear, keeping the clutch closed.

12. Transmission apparatus (4) according to claim 11, wherein the engine control unit (12) is programmed so as not to provide torque to the crankshaft (26) during the gear change phases.

13. Transmission apparatus (4) according to claim 11 or 12, wherein the automated manual transmission (16) comprises electrical or electromechanical actuators which disengage the previous gear inserted, by disconnecting the primary shaft (28) and the secondary shaft (32) from each other, select the next gear and insert it, connecting the primary shaft (28) and the secondary shaft (32).

14. Transmission apparatus (4) according to claim 11, 12 or 13, wherein the transmission control unit (20) and/or the engine control unit (12) are programmed to realise a method for changing gear according to any of the claims from 1 to 10.
